# EUROPEAN PATENT APPLICATION

(11) **EP 4 366 061 A1**
(43) Date of publication of application: **08.05.2024**
(21) Application number: 22891856.1
(22) Date of filing: 01.11.2022
(51) Int. Cl.: H01M 50/262

(54) **SCREW, CONNECTING STRUCTURE, BATTERY AND ELECTRIC DEVICE**

(30) Priority: 15.11.2021 CN 202122781892 U
(71) Applicant: Contemporary Amperex Technology Co., Limited, Ningde, Fujian 352100 (CN)
(72) Inventor: HUANG, Shengguo, Ningde, Fujian 352100 (CN); LIN, Zhiqiang, Ningde, Fujian 352100 (CN); LIN, Zhiquan, Ningde, Fujian 352100 (CN)
(74) Representative: Ziebig Hengelhaupt Intellectual Property Attorneys Patentanwaltskanzlei PartGmbB
(86) International application number: PCT/CN2022/129053
(87) International publication number: WO 2023/083060

(57) **Abstract**

This application discloses a screw, a connection structure, a battery, and an electric apparatus. The screw has a head (203) and a threaded rod (208) connected to the head (203), where an annular protrusion (207) is provided on a surface of the head (203) located on the threaded rod (208) side. When two connecting members are connected by the screw, the annular protrusion (207) of the screw abuts against one of the two connecting members to form a tightly abutting structure to achieve sealing. Alternatively, a sealant may be applied onto the head (203) at a position located radially more outward than the annular protrusion (207) to improve sealing. Therefore, even if a surface of the connected connecting member is not flat enough, sealing can be actually achieved with a reliable connection provided.

## Description

This application claims priority to Chinese Patent Application No. 202122781892.1, filed with the China National Intellectual Property Administration on November 15, 2021 and entitled "SCREW, CONNECTION STRUCTURE, BATTERY, AND ELECTRIC APPARATUS", which is incorporated herein by reference in its entirety.

### TECHNICAL FIELD

This application relates to the technical field of mechanical connection structures, and in particular, to a screw, a connection structure, a battery, and an electric apparatus.

### BACKGROUND

Self-drilling screws, especially flow drill screws, have been widely used in mechanical connection structures as fasteners. Flow drill screws (FDS, Flow Drill Screw) heat-melt and soften to-be-connected plates through high-speed rotation of the screws, and are compressed and rotated into the to-be-connected plates under the action of huge axial pressure. Finally, a threaded connection is formed between the plates and the screws, and the base material at the center hole is extruded and forms a ring-shaped sleeve structure at the bottom of the lower plate. Such flow drill screws can be used, for example, in connection with profiled box water cooling plates, in connection with profiled frames, and in batteries. How connection sealing of these screws is ensured is crucial.

### TECHNICAL PROBLEMS

This application is intended to provide a screw, a connection structure, a battery, and an electric apparatus that can ensure reliable sealing.

### TECHNICAL SOLUTIONS

To achieve the foregoing objective, a first aspect of this application provides a screw having a head and a threaded rod connected to the head, where an annular protrusion is provided on a surface of the head located on the threaded rod side.

Because the annular protrusion is provided on the surface of the head located on the threaded rod side, the annular protrusion can be embedded into a surface of a connected connecting member during self-tapping of the screw, so that the head of the screw is in close contact with the connecting member, thereby improving sealing.

In some embodiments, on a cross section at which a central axis of the annular protrusion is located, the annular protrusion has any one of a triangular cross section and an arc-shaped cross section.

The triangular or arc-shaped cross section helps the annular protrusion to be embedded into the surface of the connecting member, which is conducive to improving the sealing through close contact.

In some embodiments, the head has a plum-shaped top and a cap edge extending radially more outward than the top, the annular protrusion being disposed on the cap edge.

Because the head has the cap edge with a larger outer diameter, a contact area between the head of the screw and the connected connecting member can be increased, so as to reliably provide the annular protrusion and reserve a sufficient position for applying a sealant.

In some embodiments, on the surface of the head located on the threaded rod side, the annular protrusion has an annular sealant application portion radially outward.

Therefore, when the screw is mounted to the connecting member, as the screw is pressed into the connecting member, the sealant applied onto the annular sealant application portion overflows to fully fill a gap between the head of the screw and the surface of the connecting member. Even if the surface of the connecting member is not flat enough and excessively rough, reliable sealing can be achieved.

In some embodiments, the sealant application portion is coated with a sealant.

Therefore, the screw used can ensure that the sealant application portion is coated with the sealant, which in turn ensures good sealing between the head of the screw and the surface of the connecting member.

In some embodiments, the screw is a flow drill screw, and an annular groove is provided radially inward of the annular protrusion.

Therefore, because the annular groove is provided radially inward of the annular protrusion, the melted connecting member material and the like can enter the annular groove during self-tapping mounting of the flow drill screw, thereby ensuring that the screw is in close contact with the mounting surface of the connected connecting member. In addition, the sealant may alternatively be applied in the annular groove, thereby reliably sealing the gap between the screw and the self-tapping mounting hole. In the case of combination of providing the annular protrusion, applying the sealant radially outward of the annular protrusion, and applying the sealant in the annular groove, the sealing between the screw and the self-tapping mounting hole can be greatly improved, thereby ensuring that there is no air leakage or liquid leakage from the gap between the screw and the self-tapping mounting hole.

In some embodiments, a sealant is applied in the annular groove.

Therefore, the screw used can ensure that the sealant is applied in the annular groove, thereby reliably sealing the gap between the screw and the self-tapping mounting hole.

In some embodiments, the annular protrusion surrounds the threaded rod, and the annular protrusion and the threaded rod are spaced apart.

Therefore, the gap between the annular protrusion and the threaded rod can accommodate the material melted and overflowed from the connecting member, and the annular indentation formed by the annular protrusion being embedded into the surface of the connected connecting member is spaced apart from the threaded rod, which prevents the material melted and overflowed from the connecting member from affecting the sealing between the annular protrusion and the annular indentation, improving the sealing.

A second aspect of this application provides a connection structure including a first connecting member, a second connecting member, and a screw connecting the first connecting member and the second connecting member, where the screw is the screw according to the first aspect of this application.

Therefore, a connection structure with high sealing can be provided. Such a connection structure is particularly suitable for scenarios with a high requirement for sealing.

In some embodiments, in the connected state, the annular protrusion of the screw abuts against one of the first connecting member and the second connecting member; and on a surface at which one of the first connecting member and the second connecting member abuts against the annular protrusion, an annular indentation engaged with the annular protrusion is formed.

Because the annular protrusion of the screw forms the annular indentation on the surface of the connecting member during self-tapping, the annular protrusion can fit with the annular indentation to further improve the sealing.

In some embodiments, in the connected state, radially outward of the annular protrusion, a sealant is present between the head and a surface of a head-contacting one of the first connecting member and the second connecting member.

Providing the annular protrusion and applying the sealant radially outward of the annular protrusion can allow the sealant to overflow to fully fill the gap between the head and the surface in contact with the head, achieving reliable sealing.

In some embodiments, a sealant is provided in an annular groove radially inward of the annular protrusion.

In the mounted state, the sealant in the annular groove can fill the tiny gap between the annular groove and the mounting hole, thereby improving the sealing. In addition, in the case of combination of providing the annular protrusion, applying the sealant radially outward of the annular protrusion, and applying the sealant in the annular groove, the sealing between the screw and the self-tapping mounting hole can be greatly improved, thereby ensuring that there is no air leakage or liquid leakage from the gap between the screw and the self-tapping mounting hole.

A third aspect of this application provides a battery having the screw according to the first aspect of this application or the connection structure according to the second aspect of this application.

With the screw or connection structure provided in this application, even if the surface of the to-be-connected connecting member is not flat enough, the sealing can be greatly improved with a reliable connection achieved. Therefore, for example, when applied to connection between a profiled box and a water cooling plate and the like in the battery, the screw or connection structure can ensure that there are no undesirable situations such as liquid leakage and air leakage, thereby increasing a yield rate of the battery.

A fourth aspect of this application provides an electric apparatus including the battery according to the third aspect of this application.

### BENEFICIAL EFFECTS

### BRIEF DESCRIPTION OF DRAWINGS

To describe the technical solutions in the embodiments of this application more clearly, the following briefly describes the accompanying drawings required for describing the embodiments or illustrative techniques. Apparently, the accompanying drawings in the following description show only some embodiments of this application, and persons of ordinary skill in the art may still derive other drawings from these accompanying drawings without creative efforts.
FIG. 1 is a schematic structural diagram of a vehicle according to an embodiment of this application.
FIG. 2 is a schematic structural diagram of a battery box according to an embodiment of this application.
FIG. 3 is a schematic three-dimensional structural diagram of a screw according to an embodiment of this application.
FIG. 4 is a schematic front view of a screw according to an embodiment of this application.
FIG. 5 is a schematic top view of a screw according to an embodiment of this application.
FIG. 6 is a cross-sectional view along A-A in FIG. 5.
FIG. 7 is a schematic three-dimensional diagram of a connection structure according to an embodiment of this application.
FIG. 8 is a schematic top view of a connection structure according to an embodiment of this application.
FIG. 9 is a cross-sectional view along B-B in FIG. 8.

Description of reference signs:
1000. vehicle; 100. battery; 200. controller; 300. motor;
201. box; 201a. first portion; 201b. second portion; 202. battery cell;
203. head; 204. plum-shaped top; 205. cap edge; 206. sealant application portion; 207. annular protrusion; 208. threaded rod; 209. annular groove; 210. first connecting member; and 211. second connecting member.

### DESCRIPTION OF EMBODIMENTS OF THE PRESENT INVENTION

The specific embodiments of this application are described in detail below with reference to the accompanying drawings. The accompanying drawings are merely intended to illustrate the preferred embodiments of this application, and should not be construed as a limitation on this application. Throughout the accompanying drawings, the same reference signs represent the same components or elements.

Persons of ordinary skill in the art can clearly understand the advantages and benefits of this application by reading the detailed description of the embodiments below. The following embodiments are merely used to describe the technical solutions of this application more clearly, and therefore are illustrative and do not constitute any limitation on the protection scope of this application.

It should be noted that unless otherwise stated, the technical terms or scientific terms used herein should have general meanings as understood by persons skilled in the art to which the embodiments of this application belong.

In the descriptions of the embodiments of this application, the orientations or positional relationships indicated by the technical terms "center", "longitudinal", "transverse", "length", "width", "thickness", "upper", "lower", "front", "rear", "left", "right", "top", "bottom", "inside", "outside", and the like are based on the orientations or positional relationships as shown in the accompanying drawings. These terms are merely for ease and brevity of descriptions of the embodiments of this application rather than indicating or implying that the apparatuses or elements mentioned must have specific orientations or must be constructed or manipulated according to specific orientations, and therefore shall not be construed as any limitations on the embodiments of this application.

In addition, in the descriptions of the embodiments of this application, "a plurality of means more than two, unless otherwise specifically defined.

In the descriptions of the embodiments of this application, unless otherwise specified and defined explicitly, the technical terms "mount", "connect", "join", and "fix" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

In the descriptions of the embodiments of this application, unless otherwise specified and defined explicitly, that a first feature is "above" or "below" a second feature may mean that the first and second features are in direct contact or that the first and second features are in indirect contact via an intermediate medium. Moreover, that the first feature is "above", "over", and "on" the second feature may mean that the first feature is directly above or obliquely above the second feature or simply mean that the first feature has a higher level than the second feature. That the first feature is "below", "beneath", and "under" the second feature may mean that the first feature is directly below or obliquely below the second feature or simply mean that the first feature has a lower level than the second feature.

A screw, such as a flow drill screw, typically includes a threaded rod and a head connected to the threaded rod, where the head includes a thick cap edge, and an annular groove is provided at a joint between the cap edge and the threaded rod. The thick cap edge can withstand high pressure and torque, and can block and accommodate molten aluminum or steel flowing upward during tightening, especially when the bottom of the workpiece has not been melted. In such a screw, the annular groove can be used to accommodate the flowing molten aluminum or steel, which can avoid an excessively large gap between the screw and the workpiece caused by the flowing molten aluminum or steel extruding the exposed cap edge.

Such a screw can be driven by a dedicated mounting device to complete a series of steps such as drilling (piercing), tapping, and tightening on a single or several layers of plates such as aluminum alloy and steel plate of a certain thickness to ultimately form a threaded connection. Such a flow drill screw can be used, for example, to connect battery packs or vehicle body-related components of an all-aluminum or "steel-aluminum" structure.

The inventors of this application have found through research that when such a flow drill screw is used in a battery pack, for example, for connecting a profiled box and a water cooling plate, sealing inside the battery pack needs to be ensured, but mechanical sealing of the flow drill screw relying on only the head is greatly affected by flatness of the plate, which may lead to air leakage.

In view of the foregoing problems, the inventors of this application, through research, have invented a screw and a connection structure for connecting using the screw, so as to eliminate the foregoing problems in the related art, and to improve sealing with no need to enhance flatness of a plate. Further, a battery with good sealing and an electric apparatus using the battery are provided.

The battery involved in this application may be any battery, such as a battery module and a battery pack, or a primary battery and a secondary battery, for example, a secondary battery including a nickel-metal hydride battery, a nickel-cadmium battery, a lead-acid (or lead-storage) battery, a lithium-ion battery, a sodium-ion battery, a polymer battery, and the like. Such batteries are applicable to various electric devices that use batteries, for example, mobile phones, portable devices, notebook computers, electric bicycles, electric toys, electric tools, electric vehicles, ships, and spacecrafts. For example, spacecrafts include airplanes, rockets, space shuttles, and spaceships. The batteries are used to supply electric energy to the foregoing electric devices.

It should be understood that the technical solutions described in the embodiments of this application are not only applicable to the batteries and electric devices described above, but also applicable to all batteries and electric devices using batteries. However, for the brevity of description, in the following embodiments, the electric vehicle is used as an example for description. It is clear that the applicable scenarios of the battery involved in the embodiments of this application and the electric device involved in the embodiments of this application are not limited to the electric vehicle.

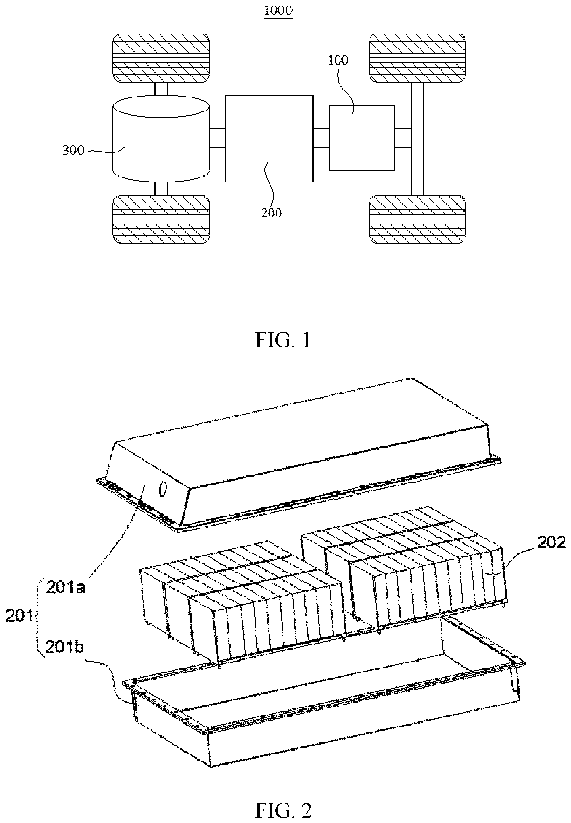

FIG. 1 is a schematic structural diagram of a vehicle 1000 according to an embodiment of this application. As shown in FIG. 1, the vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100, where the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

FIG. 2 is a schematic structural diagram of a battery box according to an embodiment of this application. The battery 100 includes a box 201 and a battery cell 202, where the battery cell 202 is accommodated in the box 201. The box 201 is configured to provide an accommodating space for the battery cell 202. The box 201 may be a variety of structures. In some embodiments, the box 201 may include a first portion 201a and a second portion 201b. The first portion 201a and the second portion 201b fit together to jointly define an accommodating space for accommodating the battery cell 202. The second portion 201b may be a hollow structure with an opening at one end, the first portion 201a may be a plate-shaped structure, and the first portion 201a covers the opening side of the second portion 201b so that the first portion 201a and the second portion 201b jointly define the accommodating space. Alternatively, both the first portion 201a and the second portion 201b may be hollow structures with an opening at one side, and the opening side of the first portion 201a is engaged with the opening side of the second portion 201b. Certainly, the box 201 formed by the first portion 201a and the second portion 201b may be of various shapes, for example, cylinder or cuboid.

In order to meet different requirements for power use, the battery 100 may include a plurality of battery cells 202. The battery cell 202 is a smallest element constituting a battery module or battery pack. The plurality of battery cells 202 can be connected in series and/or in parallel through electrode terminals for various application scenarios. The battery involved in this application may include a battery module or a battery pack. The plurality of battery cells 202 may be connected in series, parallel, or series-parallel, where being connected in series-parallel means a combination of series and parallel connections. In the embodiments of this application, the plurality of battery cells 202 may be directly combined into a battery, or they may be first combined into battery modules which are then combined into a battery.

In some embodiments, the battery cell 202 may be a lithium-ion battery, a sodium-ion battery, a magnesium-ion battery, or the like, which is not limited in the embodiments of this application. The battery cell 202 may be cylindrical, flat, cuboid, or of other shapes, which is not limited in the embodiments of this application either. The battery cells 202 are typically divided into three types by packaging method: columnar battery cell, prismatic battery cell, and pouch battery cell, which is not limited in the embodiments of this application either. The columnar battery cell can be further divided into cylindrical battery cell, polygonal prismatic battery cell, and the like based on the shape of the cross section of the columnar surface.

In addition, the battery cell 202 typically includes an end cover, a housing, and a cell assembly. The end cover is a component that covers an opening of the housing to insulate an internal environment of the battery cell 202 from an external environment. Without limitation, the shape of the end cover may be adapted to the shape of the housing to fit the housing. Optionally, the end cover may be made of a material with specified hardness and strength (for example, aluminum alloy), so that the end cover is less likely to deform when subjected to extrusion and collision, allowing the battery cell 202 to have higher structural strength and enhanced safety performance. Functional components such as an electrode terminal may be provided on the end cover. The electrode terminal may be configured to be electrically connected to the cell assembly for outputting or inputting electric energy of the battery cell 202. The end cover may also be made of various materials, such as copper, iron, aluminum, stainless steel, aluminum alloy, and plastic, which are not particularly limited in the embodiments of this application. In some embodiments, an insulator may also be disposed at an inner side of the end cover. The insulator can be configured to insulate electrical connection components in the housing from the end cover, reducing the risk of short circuit. For example, the insulator may be made of plastic, rubber, or the like.

The housing is an assembly configured to form the internal environment of the battery cell 202 together with the end cover, where the formed internal environment may be configured to accommodate the cell assembly, an electrolyte (not shown in the figure), and other components. The housing and the end cover may be independent components, and an opening may be provided in the housing such that the end cover can cover the opening to form the internal environment of the battery cell. Without limitation, the end cover and the housing may alternatively be integrated. Specifically, the end cover and the housing may form a shared connection surface before other components are disposed inside the housing, and then the housing is covered with the end cover when the inside of the housing needs to be enclosed. The housing may be of various shapes and sizes, such as a cuboid shape, a cylindrical shape, and a hexagonal prism shape. Specifically, the shape of the housing can be determined based on a specific shape and size of the cell assembly. The housing may be made of various materials, such as copper, iron, aluminum, stainless steel, aluminum alloy, and plastic, which are not particularly limited in the embodiments of this application.

The cell assembly is a component in which electrochemical reactions take place in the battery cell 202. The housing may include one or more cell assemblies. The cell assembly is mainly formed by winding or stacking a positive electrode plate and a negative electrode plate, and a separator is generally disposed between the positive electrode plate and the negative electrode plate. Parts of the positive electrode plate and the negative electrode plate that have active substances constitute a body portion of the cell assembly, while parts of the positive electrode plate and the negative electrode plate that have no active substances each constitute a tab (not shown in the figure). A positive tab and a negative tab may both be located at one end of the body portion or be located at two ends of the body portion respectively. During charging and discharging of the battery, a positive electrode active substance and a negative electrode active substance react with the electrolyte, and the tabs are connected to the electrode terminals to form a current loop.

A flow drill screw and a connection structure applied to a battery are used as an example for description of this application below. However, the application scenarios of the screw and connection structure provided in this application are obviously not limited to batteries, and the screw is not necessarily the flow drill screw and can be applied to any scenario in which there is a requirement for sealing in screw connection.

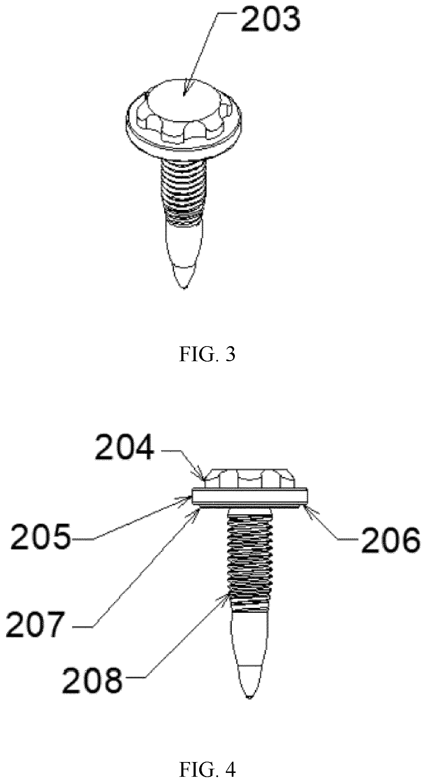

FIG. 3 to FIG. 6 schematically show a structure of a screw according to an embodiment of this application. The screw has a head 203 and a threaded rod 208 connected to the head 203, where an annular protrusion 207 is provided on a surface of the head 203 located on the threaded rod 208 side.

The head 203 is disposed at an end of the threaded rod 208, and as shown in FIG. 3, FIG. 4, and the like, the threaded rod 208 is connected to a lower surface of the head 203. The head 203 of the screw has a larger outer diameter than the threaded rod 208 and the head 203 is formed thick, so the head 203 can withstand high pressure and torque and is easy to clamp, making it less prone to sliding or falling off. In addition, the head 203 has a shielding effect around a mounting hole for insertion of the threaded rod 208.

An external thread is provided on the outer peripheral surface of the threaded rod 208, and is used to form a threaded connection by fitting with an internal thread formed in the mounting hole of the connecting member when the threaded rod 208 passes through the connecting member.

During mounting of the flow drill screw, a predetermined position of the connecting member is heated and melted through high-speed rotation of the screw, then the screw penetrates two connecting members (for example, two plates), and in the penetrated mounting holes, the two connecting members are extruded and the connecting members around the mounting holes are subjected to flanging. Meanwhile, the thread is formed in the mounting holes, and with the rotation of the screw, the screw is connected and fastened to the thread in the mounting holes, thereby achieving connection.

In such a connected state, the annular protrusion 207 formed on the surface (the lower surface in FIG. 4) of the head 203 located on the threaded rod 208 side abuts against the surface of the connecting member, and is in close contact with the surface of the connecting member, for example, the surface of the plate.

In this way, because the annular protrusion 207 is provided on the surface of the head 203 located on the threaded rod 208 side, the annular protrusion 207 can be embedded into the surface of the connected connecting member during self-tapping of the screw, so that the head 203 of the screw is in close contact with the connecting member, thereby improving the sealing.

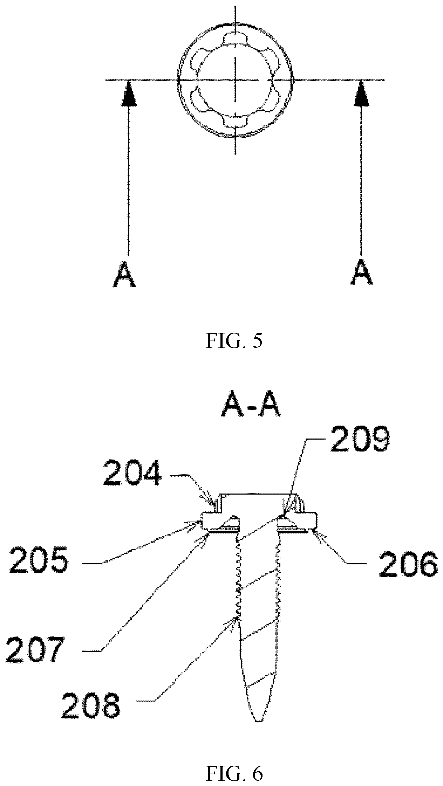

In some embodiments, as shown in FIG. 6, the annular protrusion 207 surrounds the threaded rod 208. In other words, the connection position between the threaded rod 208 and the head 203 is located inside the annular protrusion 207 and spaced apart from the annular protrusion 207.

In some embodiments, as shown in FIG. 6, the annular protrusion 207 has any one of a triangular cross section and an arc-shaped cross section. In other words, on a cross section at which a central axis of the annular protrusion 207 is located, the cross section of the annular protrusion 207 is set to be triangular or arc-shaped.

The triangular or arc-shaped cross section helps the annular protrusion to be embedded into the surface of the connecting member, which is conducive to improving the sealing through close contact.

In some embodiments, as shown in FIG. 4 to FIG. 6, the head 203 has a plum-shaped top 204 and a cap edge 205 extending radially more outward than the top 204, the annular protrusion 207 being disposed on the cap edge 205.

The plum-shaped top 204, as shown in FIG. 3 and FIG. 5, refers to a shape formed by evenly distributing a plurality of petal-shaped protrusions around the central body of a circle. Such a shape is suitable for engaging with an external driving device to provide a rotational driving force. In addition, the number of petal-shaped protrusions is not particularly limited, and can be set arbitrarily as long as the rotational driving force can be transmitted.

The cap edge 205 has an outer diameter that is larger than the maximum outer diameter of the plum-shaped top 204, and has a certain thickness. The specific sizes of the outer diameter and thickness can be set or selected based on specific use scenarios.

Because the head 203 has the cap edge 205 with a larger outer diameter, a contact area between the head 203 of the screw and the connected connecting member can be increased, so as to reliably provide the annular protrusion 207 and reserve a sufficient position for applying a sealant. In addition, the cap edge 205 can also be used to reliably cover a gap between the screw and the mounting hole, liquids produced by heat melting around the mounting hole, a flange formed after curing of these liquids, and the like.

In some embodiments, as shown in FIG. 3, FIG. 4, and FIG. 6, on the surface of the head 203 located on the threaded rod 208 side, there is an annular sealant application portion 206 at a position located radially more outward than the annular protrusion 207.

For the sealant application portion 206, for example, a sealant can be applied in advance before self-tapping mounting. However, the timing of sealant application is not limited to this.

Therefore, when the screw is mounted to the connecting member, as the screw is pressed into the connecting member, the sealant applied onto the annular sealant application portion 206 overflows to fully fill the gap between the head 203 of the screw and the surface of the connecting member. Even if the surface of the connecting member is not flat enough and excessively rough, the sealant can fully fill the tiny gap between the head 203 of the screw and the surface of the connecting member, thereby achieving reliable sealing.

In some embodiments, as shown in FIG. 6, the screw is a flow drill screw, and an annular groove 209 is provided radially inward of the annular protrusion 207.

Therefore, because the annular groove 209 is provided radially inward of the annular protrusion, the melted connecting member material (for example, molten aluminum and molten steel) and the like can enter the annular groove during self-tapping mounting of the flow drill screw, thereby ensuring that the screw is in close contact with the mounting surface of the connected connecting member. In addition, the sealant may alternatively be applied in the annular groove 209. In this way, in the mounted state, the sealant can fill the tiny gap between the annular groove 209 and the mounting hole, thereby further improving the sealing. In the case of combination of providing the annular protrusion 207, applying the sealant onto the sealant application portion 206 radially outward of the annular protrusion 207, and applying the sealant in the annular groove 209, the sealing between the screw and the self-tapping mounting hole can be greatly improved, thereby ensuring that there is no air leakage or liquid leakage from the gap between the screw and the self-tapping mounting hole.

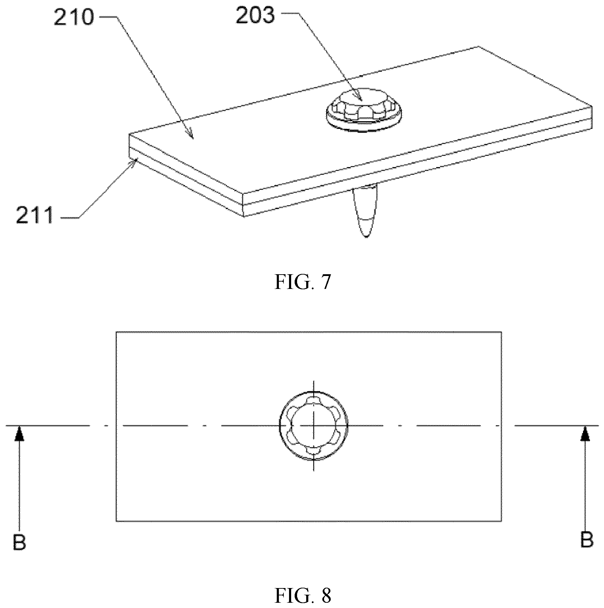

A second aspect of this application provides a connection structure. As shown in FIG. 7 to FIG. 9, the connection structure includes a first connecting member 210, a second connecting member 211, and a screw connecting the first connecting member 210 and the second connecting member 211, where the screw is the screw according to the first aspect of this application.

The first connecting member 210 and the second connecting member 211 are shown as plates in the figures, but are not limited to plates and are applicable as long as they can be connected by screws such as flow drill screws. In addition, in a specific example, the first connecting member 210 may be a water cooling plate in a battery, and the second connecting member may be a profiled box such as a battery box.

Therefore, a connection structure with high sealing can be provided. Such a connection structure is particularly suitable for scenarios with a high requirement for sealing. For example, when the connection structure is applied to the connection between the water cooling plate and the profiled box, no liquid leakage or air leakage can be ensured.

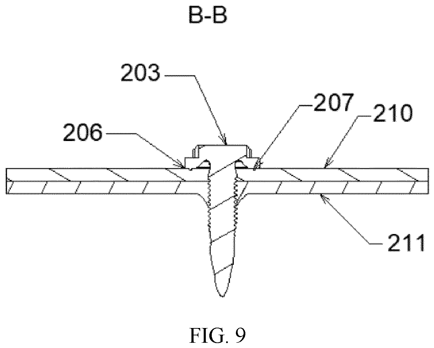

In some embodiments, as shown in FIG. 9, in the connected state, the annular protrusion 207 of the screw abuts against one of the first connecting member 210 and the second connecting member 211; and on a surface at which one of the first connecting member 210 and the second connecting member 211 abuts against the annular protrusion 207, an annular indentation engaged with the annular protrusion is formed.

In the example shown in FIG. 9, the annular protrusion 207 abuts against an upper surface of the first connecting member 210. As shown in FIG. 9, on the upper surface of the first connecting member 210, there is an indentation at a position corresponding to the annular protrusion 207.

Because the annular protrusion 207 of the screw forms the annular indentation on the surface of the first connecting member 210 during self-tapping, the annular protrusion 207 can fit with the annular indentation to further improve the sealing.

In some embodiments, as shown in FIG. 9, in the connected state, at a position located radially more outward than the annular protrusion 207, a sealant is present between the head 203 and a surface (the upper surface of the first connecting member 210 in FIG. 9) of a head-contacting one of the first connecting member 210 and the second connecting member 211. In addition, a sealant is also present in the annular groove 209 (refer to FIG. 6) radially more inward than the annular protrusion 207.

In the case of combination of providing the annular protrusion 207, applying the sealant onto the sealant application portion 206 radially outward of the annular protrusion 207, and applying the sealant in the annular groove 209, the sealing between the screw and the self-tapping mounting hole can be greatly improved, thereby ensuring that there is no air leakage or liquid leakage from the gap between the screw and the self-tapping mounting hole.

A third aspect of this application provides a battery having the screw according to the first aspect of this application or the connection structure according to the second aspect of this application.

With the screw or connection structure provided in this application, even if the surface of the to-be-connected connecting member is not flat enough, the sealing can be greatly improved with a reliable connection achieved. Therefore, for example, when applied to the connection between the profiled box and the water cooling plate and the like in the battery, the screw or connection structure can ensure that there are no undesirable situations such as liquid leakage and air leakage, thereby increasing a yield rate of the battery.

A fourth aspect of this application provides an electric apparatus including the battery according to the third aspect of this application.

Therefore, a battery with high use reliability can be provided.

The following describes a specific embodiment of this application as an example.

As shown in FIG. 3 to FIG. 9, the flow drill screw is provided with a head 203, where the head 203 includes a plum-shaped top 204, a cap edge 205, an annular protrusion 207 formed on a lower surface of the cap edge, and a sealant application portion 206 provided on the lower surface of the cap edge; and a threaded rod 208.

When two plates are connected using such a flow drill screw, the flow drill screw is driven by a dedicated mounting device to enable the threaded rod 208 to complete a series of steps such as drilling (piercing), tapping, and tightening on an upper plate as the first connecting member 210 and a lower plate as the second connecting member 211 to ultimately form a threaded connection.

In this process, the annular protrusion 207 on the lower surface of the cap edge of the flow drill screw is embedded into an upper surface of the upper plate as the first connecting member 210, and the sealant applied onto the sealant application portion 206 on the lower surface of the cap edge and the sealant filled in the annular groove 209 can fill the gap between the flow drill screw and the upper plate as the first connecting member 210, enhancing reliability of the sealant.

The embodiments of this application have been described above, but persons skilled in the art should know that this application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A screw, having a head and a threaded rod connected to the head, **characterized in that** an annular protrusion is provided on a surface of the head located on the threaded rod side.

2. The screw according to claim 1, **characterized in that**
on a cross section at which a central axis of the annular protrusion is located, the annular protrusion has any one of a triangular cross section and an arc-shaped cross section.

3. The screw according to claim 1 or 2, **characterized in that**
the head has a plum-shaped top and a cap edge extending radially more outward than the top, the annular protrusion being disposed on the cap edge.

4. The screw according to claim 1 or 2, **characterized in that**
on the surface of the head located on the threaded rod side, the annular protrusion has an annular sealant application portion radially outward.

5. The screw according to claim 4, **characterized in that** the sealant application portion is coated with a sealant.

6. The screw according to claim 1 or 2, **characterized in that**
the screw is a flow drill screw, and
an annular groove is provided radially inward of the annular protrusion.

7. The screw according to claim 6, **characterized in that** a sealant is applied in the annular groove.

8. The screw according to claim 1 or 2, **characterized in that** the annular protrusion surrounds the threaded rod, and the annular protrusion and the threaded rod are spaced apart.

9. A connection structure, comprising a first connecting member, a second connecting member, and a screw connecting the first connecting member and the second connecting member, **characterized in that**
the screw is the screw according to any one of claims 1 to 8.

10. The connection structure according to claim 9, **characterized in that**
in a connected state, the annular protrusion of the screw abuts against one of the first connecting member and the second connecting member; and
on a surface at which one of the first connecting member and the second connecting member abuts against the annular protrusion, an annular indentation engaged with the annular protrusion is formed.

11. The connection structure according to claim 10, **characterized in that**
in the connected state, radially outward of the annular protrusion, a sealant is present between the head and a surface of a head-contacting one of the first connecting member and the second connecting member.

12. The connection structure according to claim 10 or 11, **characterized in that**
a sealant is provided in an annular groove radially inward of the annular protrusion.

13. A battery, **characterized by** comprising the screw according to any one of claims 1 to 8 or the connection structure according to any one of claims 9 to 12.

14. An electric apparatus, **characterized by** comprising the battery according to claim 13.
